**Europäisches Patentamt**

**European Patent Office**

**Office européen des brevets**

(19)

(11) Veröffentlichungsnummer : **0 463 435 B1**

(12) # EUROPÄISCHE PATENTSCHRIFT

(45) Veröffentlichungstag der Patentschrift :
06.04.94 Patentblatt 94/14

(51) Int. Cl.$^5$ : **C04B 35/46**

(21) Anmeldenummer : **91109400.1**

(22) Anmeldetag : **08.06.91**

(54) **Verwendung von Magnesiumtitanat-Pulver.**

(30) Priorität : **22.06.90 DE 4019861**

(43) Veröffentlichungstag der Anmeldung :
**02.01.92 Patentblatt 92/01**

(45) Bekanntmachung des Hinweises auf die
Patenterteilung :
**06.04.94 Patentblatt 94/14**

(84) Benannte Vertragsstaaten :
**DE FR GB IT**

(56) Entgegenhaltungen :
**EP-A- 0 312 923**
**WO-A-84/02521**

(73) Patentinhaber : **BAYER AG**
**D-51368 Leverkusen (DE)**

(72) Erfinder : **Freudenberg, Bernhard, Dr.**
**Sesslacher Weg 11**
**W-8630 Coburg (DE)**
Erfinder : **Seyer, Johannes, Dipl.-Ing.**
**Mittelberger Strasse 14**
**W-8633 Rödental (DE)**
Erfinder : **Auer, Gerhard, Dr.**
**Buschstrasse 163**
**W-4150 Krefeld (DE)**

EP 0 463 435 B1

## Beschreibung

Die vorliegende Erfindung betrifft die Verwendung eines magnesiumhaltigen keramischen Rohstoffes mit verbesserten Verarbeitungseigenschaften im wäßrigen Schlickerguß.

Magnesiumverbindungen werden häufig der keramischen Rohstoffmischung zugesetzt, um das Sinterverhalten sowie die Eigenschaften des fertigen Sinterformkörpers zu verbessern. Die Aluminiumoxidkeramik enthält Magnesiumverbindungen, um die Verdichtung während des Sinterbrandes zu fördern. Ebenso enthält die Siliziumnitridkeramik in vielen Fällen Magnesiumverbindungen, um das Dichtsintern zu ermöglichen.

An den magnesiumhaltigen Rohstoff werden verschiedene Anforderungen gestellt, wie chemische Reinheit, Reaktionsfreudigkeit, günstiger Preis etc, Im Fall der keramischen Formgebung über die Schlickerphase kommt das Dispergierverhalten als wichtiges Qualitätsmerkmal hinzu. Dieser Aspekt erweist sich beim Verschlickern von Magnesiumverbindungen als besonders problematisch.

Der Aluminiumtitanatkeramik werden Magnesiumverbindungen zugesetzt, um die thermische Stabilität bei hohen Temperaturen zu verbessern. Gemäß der US-A 3 578 471 werden Magnesiumoxid und Magnesiumspinell als Magnesiumquelle verwendet. In der EP-B 36 462 werden Magnesiumoxid, Magnesiumkarbonat und Magnesiumhydroxid als mögliche Rohstoffkomponenten angeführt. Gemäß der DE-C 2 750 290 wird Magnesiumsilikat als Versatzkomponente bevorzugt, insbesondere das natürliche Silikat Sepiolith (4 MgO x 6 $SiO_2$ x 7 $H_2O$).

In der US-A 4 316 965 wird neben Magnesiumoxid, -karbonat und -hydroxid noch der natürlichen Rohstoff-Talk (3 MgO x 4 $SiO_2$ x $H_2O$) erwähnt. Zusätzlich werden in der DE-A 3 644 664 noch Mg-Al-Silikat und $MgFe_2O_4$ als magnesiumhaltige Rohstoffe angeführt. Für eine siliciumfreie Aluminiumtitanatkeramik wird gemäß der DE-B 2 341 325 $MgF_2$ verwendet.

Talk wird auch gemäß der US-A 2 776 896 bevorzugt als Magnesiumrohstoff eingearbeitet. In Spalte 7, Zeile 3 ff wird neben anderen auch die Verwendung von MgO x 2 $TiO_2$ als Additiv angeführt, ohne auf das Formgebungsverfahren einzugehen. Vorteile bzw. Nachteile gegenüber anderen Magnesiumquellen sind nicht beschrieben.

Der Schlickerguß von keramischen Formkörpern ist häufig das Formgebungsverfahren der Wahl, wenn es gilt, komplizierte Geometrien, zum Beispiel mit Hinterschnitten, zu fertigen.

Nun treten aber beim Einsatz von Magnesiumoxid, -karbonat und -hydroxid in Rohstoffmischungen erhebliche Probleme beim Verschlickern in wässrigen Suspensionen auf. Insbesondere feinkörnige, d.h. reaktive MgO-Rohstoffe neigen stark zur Hydrolyse und führen zum Andicken des Schlickers, was die Verarbeitung unmöglich macht. Deshalb werden MgO-haltige Versätze häufig in Alkoholen oder Kohlenwasserstoffen als Dispersionsmittel eingearbeitet (siehe z.B. S. G. WHITEWAY u. a. "Slip Casting Magnesia" in Ceramic Bulletin 40 (1961) S. 432 - 438), was in der Praxis einen erheblichen Aufwand verursacht. Insbesondere im Fall von $SiO_2$-haltigen Rohstoffmischungen besteht eine starke Neigung zur Heterokoagulation, was sich als Andicken des Schlickers bemerkbar macht.

Die EP-A-31 29 23 beschreibt weiterhin eine $MgTiO_3$-haltige Zusammensetzung zur Herstellung von niedrig brennenden Kondensatoren, insbesondere Vielschicht-Kondensatoren. Diese werden entweder über den Weg des Foliengießens oder über den Weg der Dickfilmtechnik hergestellt. In beiden Fällen wird die Suspension, bestehend aus einem feinen keramischen Pulver und einem dünn- bzw. dickflüssigen Medium sowie Hilfsstoffen, auf eine nichtsaugende Unterlage aufgetragen. Die Suspension verfestigt sich durch die Verdampfung des Lösungsmittels. Diese Technik erlaubt die Herstellung von dünnwandigen, insbesondere ebenen Bauteilen. Als Suspensionsmedium werden dabei ausschließlich organische Substanzen offenbart, wohlwissend, daß die Dispergierung von Erdalkaliverbindungen im wäßrigen System Probleme bereiten würde.

Es handelt sich bei diesem Verfahren somit weder um ein Schlickergußverfahren, noch wird es im wäßrigen Medium durchgeführt.

Auch natürliche Rohstoffe führen zu erheblichen Problemen beim Verschlickern. Talk ist von Natur aus hydrophob. Natürlicher Sepiolith mit seinem hohen Alkali-Gehalt gibt davon einen Großteil als Elektrolyte in das Dispersionsmittel ab, was zu einem Andicken des Schlickers führt.

Aufgabe dieser Erfindung war nun die Bereitstellung eines magnesiumhaltigen Rohstoffes im wäßrigen Schlickerguß, der die beschriebenen Nachteile des Standes der Technik nicht aufweist.

Überraschenderweise wurde nun gefunden, daß beim Einsatz von Magnesiumtitanat diese negativen Eigenschaften nicht auftreten.

Gegenstand dieser Erfindung ist somit die Verwendung von Magnesiumtitanat-Pulver als Magnesiumquelle in keramischen Schlickerguß-Rohstoffmischungen.

In der Praxis erlaubt die Verwendung von Magnesiumtitanat die Herstellung eines Schlicker mit höherem Feststoffgehalt bei reduzierter Strukturviskosität.

Bevorzugt handelt es sich beim erfindungsgemäßen Magnesiumtitanat-Pulver um eines oder mehrere aus

der Gruppe $MgTiO_3$, $Mg_2TiO_4$ und/oder $MgTi_2O_5$. Ein weiterer Vorteil bei der Verwendung von Magnesiumtitanat-Pulver ist in der hohen Reaktivität beim keramischen Brand zu sehen, siehe auch das unten angeführte Beispiel.

Ein weiterer Vorteil des synthetischen Magnesiumtitanates gegenüber natürlichen Rohstoffen ist dessen Reinheit. Die natürlichen Rohstoffe enthalten insbesondere Alkali-und Calcium-Verunreinigungen, welche bei Aluminiumtitanatkeramik zu einer reduzierten Zerfallsbeständigkeit führen.

Die Menge des eingesetzten Magnesiumtitanates beträgt bevorzugt 0,05 bis 50 Gew.-%, gerechnet als $MgTiO_3$ und bezogen auf die gesamte Rohstoffmischung.

In einer besonders bevorzugten Ausführungsform dieser Erfindung handelt es sich bei den Rohstoffmischungen um Aluminiumtitanat-Rohstoffmischungen, Besonders gute Ergebnisse werden dabei erzielt, wenn die Rohstoffmischung nach dem Sintern Aluminiumtitanat oder Aluminiumtitanat-Mischkristalle zu mehr als 30 Gew.-% enthält.

Im folgenden wird die Erfindung beispielhaft erläutert.

## Beispiel

Zum Vergleich wurden verschiedene Mg-haltige Rohstoffe in einen Aluminiumtitanat-Versatz eingearbeitet. Der Versatz enthielt in der Summe 56,7 Gew.-% $Al_2O_3$, 40,4 Gew.-% $TiO_2$, 2,6 Gew.-% $SiO_2$ und 0,3 Gew.-% MgO. Als Rohstoffe wurden verwendet $MgTiO_3$ (AC 5555, Fa. Bayer), MgO (2000A, Fa. Chemag), $MgAl_2O_4$ (Fa. Chemag) und Sepiolith (Typ S, Fa. Mandt).

Die Tabelle I zeigt die Phasenzusammensetzung nach einer Reaktionsdauer von 10 h bei 1300°C an Luft ermittelt über Röntgenbeugung.

Das $MgAl_2O_4$ erweist sich als relativ reaktionsträge. $MgTiO_3$ stellt die reaktivste Verbindung dar.

## Tabelle I

Vergleich der Phasenzusammensetzung nach 10 h bei 1300°C bei der Verwendung unterschiedlicher Magnesiumquellen.

| | | Mg-Rohstoff | | | |
| --- | --- | --- | --- | --- | --- |
| | | $MgTiO_3$ | MgO | Sepiolith | $MgAl_2O_4$ |
| Phasen-zusam-menset-zung-nach dem Brand [Gew.-%] | $Al_2TiO_5$ | 58 | 35 | 22 | 17 |
| | Mullit | 7 | 5 | 5 | 6 |
| | $Al_2O_3$ | 17 | 24 | 34 | 35 |
| | $TiO_2$ | 11 | 16 | 20 | 21 |

## Patentansprüche

1. Verwendung von Magnesiumtitanat-Pulver als Magnesiumquelle in wäßrigen keramischen Schlickerguß-Rohstoffmischungen.

2. Verwendung gemäß Anspruch 1, dadurch gekennzeichnet, daß das Magnesiumtitanat-Pulver eines oder mehrere aus der Gruppe $MgTiO_3$, $Mg_2TiO_4$ und/oder $MgTi_2O_5$ ist.

3. Verwendung gemäß einem der Ansprüche 1 oder 2, daß die Menge Magnesiumtitanat 0,05 bis 50 Gew.-

EP 0 463 435 B1

%, gerechnet als $MgTiO_3$ und bezogen auf die gesamte Rohstoffmischung, beträgt.

4. Verwendung gemäß einem oder mehreren der Ansprüche 1 bis 3, dadurch gekennzeichnet, daß die Rohstoffmischungen Aluminiumtitanat-Rohstoffmischungen sind.

5. Verwendung gemäß Anspruch 4, dadurch gekennzeichnet, daß die Rohstoffmischung nach dem Sintern Aluminiumtitanat oder Aluminiumtitanat-Mischkristalle zu mehr als 30 Gew.-% enthält.

## Claims

1. The use of magnesium titanate powder as magnesium source in water-containing mixtures of ceramic raw materials for slip casting.

2. The use claimed in claim 1, characterized in that the magnesium titanate powder is one or more from the group consisting of $MgTiO_3$, $Mg_2TiO_4$ and/or $MgTi_2O_5$.

3. The use claimed in claim 1 or 2, characterized in that the magnesium titanate is used in a quantity of 0.05 to 50% by weight, expressed as $MgTiO_3$ and based on the mixture of raw materials as a whole.

4. The use claimed in one or more of claims 1 to 3, characterized in that the mixtures of raw materials are aluminium titanate raw material mixtures.

5. The use claimed in claim 4, characterized in that, after sintering, the mixture of raw materials contains more than 30% by weight aluminium titanate or aluminium titanate mixed crystals.

## Revendications

1. Utilisation de titanate de magnésium en poudre comme source de magnésium dans des mélanges aqueux de matières premières céramiques de coulée en barbotine.

2. Utilisation suivant la revendication 1, caractérisée en ce que le titanate de magnésium en poudre consiste en un ou plusieurs représentants du groupe $MgTiO_3$, $Mg_2TiO_4$ et ou $MgTi_2O_5$.

3. Utilisation suivant l'une des revendications 1 et 2, caractérisée en ce que la quantité de titanate de magnésium est de 0,05 à 50 % en poids, exprimée en $MgTiO_3$ et par rapport au mélange total de matières premières.

4. Utilisation suivant une ou plusieurs des revendications 1 à 3, caractérisée en ce que les mélanges de matières premières sont des mélanges de matières premières à base de titanate d'aluminium.

5. Utilisation suivant la revendication 4, caractérisée en ce que le mélange de matières premières contient après frittage du titanate d'aluminium ou des cristaux mixtes de titanate d'aluminium en proportion de plus de 30 % en poids.